# EUROPEAN PATENT APPLICATION

(11) **EP 4 685 924 A1**
(43) Date of publication of application: **28.01.2026**
(21) Application number: 25181783.9
(22) Date of filing: 10.06.2025
(51) Int. Cl.: H01M 10/613, H01M 10/625, H01M 10/6556, H01M 10/6567, H01M 10/6568, H01M 50/204

(54) **BOX BODY ASSEMBLY AND BATTERY PACK**

(30) Priority: 23.07.2024 CN 202421756566 U; 31.07.2024 CN 202421847827 U; 14.10.2024 WO PCT/CN2024/124752
(71) Applicant: Eve Energy Co., Ltd., Huizhou, Guangdong 516006 (CN)
(72) Inventor: YANG, Shao, Huizhou, Guangdong, 516006 (CN); HUANG, Weicai, Huizhou, Guangdong, 516006 (CN)
(74) Representative: Berggren Oy

(57) **Abstract**

A box body assembly and a battery pack are provided in the present application. The box body assembly (100) includes a box body and liquid cooling joint groups. The box body comprises a first cooling plate (11) and a second cooling plate (12). The liquid cooling joint groups include a first liquid cooling joint (21) and a second liquid cooling joint (22). The second liquid cooling joint includes a first transition section, a second transition section, and a third transition section. A distance between an orthographic projection of the first liquid cooling joint on a plane where the second cooling plat is located and an orthographic projection of the first transition section on the plane where the second cooling plate is located is D1, a distance from the first transition section to a side edge is D2, and D2 is greater than D1, so as to reduce space and cost on a front panel.

## Description

### TECHNICAL FIELD

The present application relates to the field of battery technology, and in particular to a box body assembly and a battery pack.

### BACKGROUND

In related technologies, a battery pack is configured to mount a battery module in a vehicle. When a battery operates at high power, the battery would generate a large amount of heat. In order to ensure the consistency of the temperature in the battery pack and avoid the impact of excessive heat on the life and performance of the battery, or the thermal runaway of the battery pack caused by the high temperature, a cooling system would be arranged in the battery pack to cool the battery module. The cooling system is connected by a coolant delivery pipe, and the coolant delivery pipe is connected to a coolant delivery pump and other external devices.

### SUMMARY

A cooling channel is connected to a coolant pipe by a water-cooled joint. An arrangement of the coolant pipe in existing art is unreasonable, which increases the cost of the pipe.

The present application provides a box body assembly, and the box body assembly includes:
a box body including a first cooling plate and a second cooling plate arranged opposite to each other, and first side plates connected between the first cooling plate and the second cooling plate, in which the first side plate includes side edges arranged opposite to each other; and
liquid cooling joint groups including a first liquid cooling joint and a second liquid cooling joint, in which the first liquid cooling joint is connected to the first cooling plate;
in which the second liquid cooling joint includes a first transition section, a second transition section, and a third transition section; the first transition section is connected to the second cooling plate; both the second transition section and the third transition section are connected to the first transition section; the second transition section is configured to connect to an external liquid cooling structure; the third transition section and the second transition section are arranged to extend in directions facing away from each other and in communication with the first liquid cooling joint; a distance between an orthographic projection of the first liquid cooling joint on a plane where the second cooling plate is located and an orthographic projection of the first transition section on the plane where the second cooling plate is located is D1; a distance from the first transition section to the side edge is D2, and D2 is greater than D1.

The present application further provides a battery pack including a battery module and the box body assembly as described above, a mounting space is formed in a box body of the box body assembly; the battery module is arranged in the mounting space; the second cooling plate is located at a bottom of the battery module.

The present application provides a box body assembly including a first liquid cooling joint and a second liquid cooling joint. A distance between an orthographic projection of the first liquid cooling joint on a plane where the second cooling plate is located and an orthographic projection of the first transition section on the plane where the second cooling plate is located is D1, a distance from the first transition section to the side edge is D2, and D2 is greater than D1. Compared with the existing technology, a distance between the second liquid cooling joint and an external frame is greater than a distance between the first liquid cooling joint and the second liquid cooling joint, so as to reduce space and cost on the first side plates, meanwhile, when connected to a vehicle, it allows for a larger bending radius of external liquid cooling pipes, improving space utilization.

The battery pack provided in the present application adopts the box body assembly, which reduces manufacturing cost of the battery pack.

### BRIEF DESCRIPTION OF THE DRAWINGS

FIG. 1 is a front view of a box body assembly provided in an embodiment of the present application;
FIG. 2 is one exploded view of a box body assembly provided in an embodiment of the present application;
FIG. 3 is one schematic diagram of a structure of a box body assembly provided in an embodiment of the present application;
FIG. 4 is an enlarged schematic diagram of part A of the embodiment shown in FIG. 3;
FIG. 5 is another exploded view of a box body assembly provided in an embodiment of the present application;
FIG. 6 is a schematic diagram of a structure of a box body provided in an embodiment of the present application;
FIG. 7 is a schematic diagram of a disassembled structure of a box body provided in an embodiment of the present application;
FIG. 8 is an enlarged view of part B of the embodiment shown in FIG. 7;
FIG. 9 is a cross-sectional view taken along direction A-A in FIG. 6; and
FIG. 10 is a front view of a box body provided in an embodiment of the present application, in which a sealing part is not shown.

### Reference numerals in the accompany drawings:

100: box body assembly; 1001: mounting space;
10: box body; 11: first cooling plate; 110: box body part; 111: first protruding part; 12: second cooling plate; 121: second protruding part; 112: sub-plate; 120: main plate; 130: sealing part; 140: first side plate; 141: second side plate;
20: liquid cooling joint group; 21: first liquid cooling joint; 22: second liquid cooling joint; 221: first transition section; 222: second transition section; 223: third transition section;
30: liquid cooling pipe; 31: first liquid cooling section; 32: second liquid cooling section; 33: connecting section;
40: liquid cooling flow channel; 1120: first liquid cooling channel; 1121: first sub-flow channel; 1122: first opening; 1210: second liquid cooling channel; 1211: second sub-flow channel; 1212: second opening; 1213: second notch; 1214: second communication hole; 1215: second spacer plate; 1216: second gap; 1128: mounting face.

### DETAILED DESCRIPTION

In the description of the present application, unless otherwise expressly provided and qualified, the terms "connected to", "connected", "fixed" shall be understood in a broad sense. For example, it is a fixed connection, a detachable connection, or into one; it is mechanical connection or electrical connection; it is directly connected or indirectly connected through an intermediate medium; and it is the internal connection of two components or the interaction between two components. For ordinary skilled personnel in the art, the specific meaning of the above terms in the present application is understood according to the specific situation.

In the present application, unless otherwise expressly provided and qualified, a first feature is "on" or "under" a second feature includes direct contact between the first feature and the second feature, or includes contact between the first feature and the second feature not directly but through other features between them. Moreover, the first feature is "on", "up" and "above" the second feature includes the first feature is directly above and obliquely above the second feature, and a level of the first feature is higher than a level of the second feature. The first feature is "under", "underneath" and "below" the second feature includes the first feature is directly below and obliquely below the second feature, and the level of the first feature is lower than the level of the second feature.

In the description of this embodiment, the terms "up", "down", "left", "right", "front", "back" and other orientation or positional relationship are based on the orientation or positional relationship shown in the accompany drawings, which is to facilitate the description and simplification of operations, rather than indicating or implying that the device or component referred to must have a specific orientation, be constructed and operated in a specific orientation, and therefore cannot be understood as a limitation on the present application. In addition, the terms "first" and "second" are used to distinguish in description and have no special meaning.

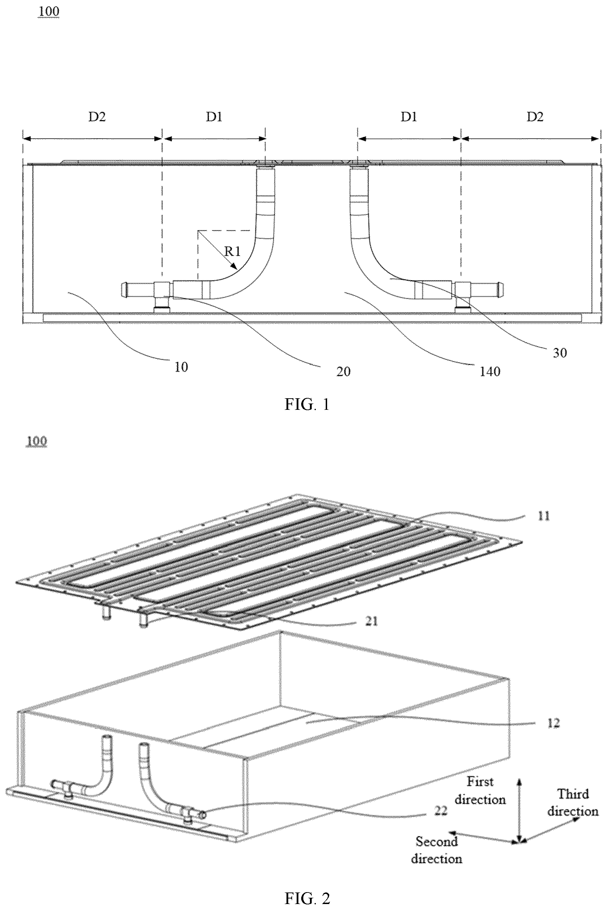

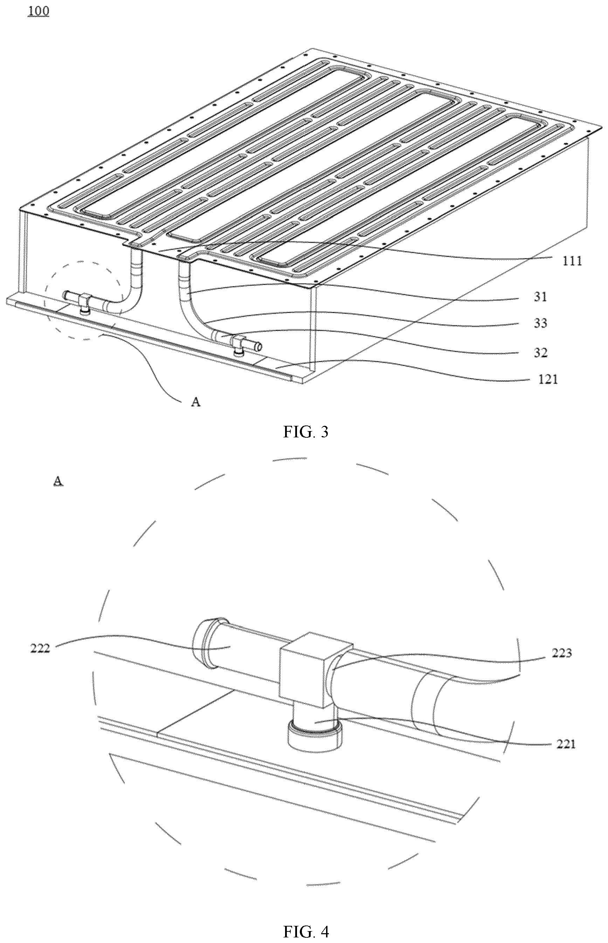

Please refer to FIG. 1 to FIG. 3. FIG. 1 is a front view of a box body assembly provided in an embodiment of the present application, FIG. 2 is one exploded view of a box body assembly provided in an embodiment of the present application, and FIG. 3 is schematic diagram of a structure of a box body assembly provided in an embodiment of the present application. The present application provides a box body assembly 100. The box body assembly 100 includes a box body 10 and liquid cooling joint groups 20, the box body 10 includes a first cooling plate 11 and a second cooling plate 12 arranged opposite to each other, and first side plates 140 connected between the first cooling plate 11 and the second cooling plate 12. The first side plates 140 include side edges arranged opposite to each other. The first side plates 140 are vertically arranged between the first cooling plate 11 and the second cooling plate 12, that is, an end of the first side plates 140 is perpendicularly connected to the first cooling plate 11, and another end of the first side plates is perpendicularly connected to the second cooling plate 12.

The liquid cooling joint group 20 includes a first liquid cooling joint 21 and a second liquid cooling joint 22. The first liquid cooling joint 21 is connected to the first cooling plate 11 and arranged in a first direction. The second liquid cooling joint 22 is connected to the second cooling plate 12 and arranged in a second direction. The first direction is different from the second direction. The first direction is perpendicular to the second direction. For example, the first direction is a height direction of the box body assembly 100, and the second direction is a width direction of the box body assembly 100.

Please refer to FIG. 4. FIG. 4 is an enlarged schematic diagram of part A of the embodiment in FIG. 3. In some embodiments, the second liquid cooling joint 22 includes a first transition section 221, a second transition section 222, and a third transition section 223. The first transition section 221 is connected to the second cooling plate 12, and both the second transition section 222 and the third transition section 223 are connected to the first transition section 221. The second transition section 222 is configured to connect to an external liquid cooling structure, and the third transition section 223 is connected to the second liquid cooling section 32.

In some embodiments, the first transition section 221 is arranged to extend in the first direction, the second transition section 222 and the third transition section 223 are arranged to extend in the second direction, and the second transition section 222 and the third transition section 223 are arranged to extend in directions facing away from each other and are in communication with the first liquid cooling joint 21. A distance between an orthographic projection of the first liquid cooling joint 21 on a plane where the second cooling plate 12 is located and an orthographic projection of the first transition section 221 on the plane where the second cooling plate 12 is located is D1, a distance from the first transition section 221 to the side edge is D2, and D2 is greater than D1.

The second transition section 222 and the third transition section 223 are arranged at a same height from the second cooling plate 12. One part of a coolant entering from the second transition section 222 enters the second cooling plate 12 through the first transition section 221, and another part of the coolant enters the second liquid cooling section 32 through the third transition section 223, and enters the first cooling plate 11 through the first liquid cooling section 31.

In some embodiments, the second liquid cooling joint 22 is connected to the second cooling plate 12 by welding. In addition, the connection is achieved by riveting, screwing, and other methods, and the specific connection method is not limited in the present application.

Specifically, in a liquid cooling system with a traditional design, a length of D1 is large, which makes a distance between liquid cooling joints between two cooling plates long, increases the cost of the pipes in the liquid cooling system, and occupies more space of the first side plates 140. Compared with the existing technology, a distance between the second liquid cooling joint 22 and an external frame is greater than aa distance between the first liquid cooling joint 21 and the second liquid cooling joint 22, so as to reduce space and cost on a front panel, meanwhile, when connected to a vehicle, it allows for a larger bending radius of an external liquid cooling pipe and improving space utilization.

In some embodiments, the first cooling plate 11 includes a first protruding part 111, the first protruding part 111 is arranged to protrude from the first side plate 140, and the first liquid cooling joint 21 is connected to the first protruding part 111.

In some embodiments, the second cooling plate 12 includes a second protruding part 121, the second protruding part 121 is arranged to protrude from the first side plate 140, and the first transition section 221 is connected to the second protruding part 121.

It is understood that liquid cooling pipes 30 are arranged outside the first side plates 140 to avoid the liquid cooling pipes 30 and the liquid cooling joint groups 20 from occupying a space inside the box body 10 of a battery and expanding the space inside the box body 10 of the battery. Meanwhile, even if a leakage is occurred at the first liquid cooling joint 21 or the second liquid cooling joint 22, the coolant would not enter the interior of the box body 10 of the battery, thereby improving battery safety.

In some embodiments, an orthographic projection of the second liquid cooling joint 22 and an orthographic projection of the first liquid cooling joint 21 on a plane where the second cooling plate 12 is located are arranged to be offset from each other. It is understood that, in the first direction, the first liquid cooling joint 21 and the second liquid cooling joint 22 are arranged to be offset from each other, that is, the first liquid cooling joint 21 and the second liquid cooling joint 22 are not on a same straight line, and an orthographic projection of the first liquid cooling joint 21 and an orthographic projection of the second liquid cooling joint 22 on the plane where the cooling plate 12 is located are not overlapped with each other.

In some embodiments, the first protruding part 111 is located in the middle of the first cooling plate 11, and a length of the second protruding part 121 is equal to a length of the second cooling plate 12. The first liquid cooling joint 21 is close to a central axis in a length direction of the first side plates 140, the second liquid cooling joint 22 is away from the central axis in the length direction of the first side plates 140, and the second liquid cooling section 32 is close to the second cooling plate 12 and extends in a direction away from the central axis in the length direction of the first side plates 140.

In some embodiments, a length of the first protruding part 111 is equal to a length of the first cooling plate 11, and the second protruding part 121 is located in the middle of the second cooling plate 12. The second liquid cooling joint 22 is close to the central axis in the length direction of the first side plates 140, the first liquid cooling joint 21 is away from the central axis in the length direction of the first side plates 140, and the second liquid cooling section 32 is close to the first cooling plate 11 and extends in the direction away from the central axis in the length direction of the first side plates 140.

In some embodiments, the box body assembly 100 further includes liquid cooling pipes 30. The liquid cooling pipe 30 includes a first liquid cooling section 31, a connecting section 33, and a second liquid cooling section 32 connected in sequence. The first liquid cooling section 31 extends in the first direction and is connected to the first liquid cooling joint 21. The second liquid cooling section 32 extends in the second direction and is connected to the second liquid cooling joint 22. The connecting section 33 is bent and connected between the first liquid cooling section 31 and the second liquid cooling section 32.

It should be noted that a pipe radius of the first liquid cooling section 31, a pipe radius of the connecting section 33, and a pipe radius of the second liquid cooling section 32 are equal. The connecting section 33 is of a structure bent into an arc shape. If a bending radius of the connecting section 33 is too small, cracks would appear, and the pipe will be flattened. The bending radius of the connecting section 33 is configured to 5 times a diameter of the liquid cooling pipes 30.

It is understood that compared with multiple bending structures are arranged on the liquid cooling pipes 30 in the existing technology, one connecting section 33 is bent and connected between the first liquid cooling section 31 and the second liquid cooling section 32 in the present application, which simplifies a structure while ensuring liquid cooling effect. When the flow direction of the coolant changes, due to the connecting section 33, a blockage of the coolant is avoided, and a flow efficiency of the coolant is improved.

In some embodiments, the box body assembly 100 includes two liquid cooling joint groups 20 and two liquid cooling pipes 30, each liquid cooling pipe 30 corresponds to one of the liquid cooling joint groups 20, one liquid cooling pipe 30 is configured for the inflow of the coolant, and another liquid cooling pipe 30 is configured for the outflow of the coolant.

Specifically, one end of each liquid cooling pipe 30 is connected to the first liquid cooling joint 21, and another end of each liquid cooling pipe is connected to the second liquid cooling joint 22. One liquid cooling joint group 20 and one liquid cooling pipe 30 constitute a liquid cooling pipe assembly. The box body assembly 100 includes two liquid cooling pipe assemblies. The two liquid cooling pipe assemblies are arranged on both sides of the central axis in the length direction of the first side plates 140. One of the two liquid cooling pipe assemblies is configured for the inflow of the coolant, and another one of the two liquid cooling pipe assemblies is configured for the outflow of the coolant.

In some embodiments, the liquid cooling pipe 30 further includes a connecting section 33, one end of the connecting section 33 is connected to the first liquid cooling section 31, and another end of the connecting section is connected to the second liquid cooling section 32. A bending radius of the connecting section 33 is R1, and a length of D1 is not less than the length of R1.

Specifically, if D1 is too short, it is inconvenient to connect external liquid cooling pipes 30 to the second liquid cooling joint 22, and the length of D1 should not be less than a bending radius R1 of the liquid cooling pipes 30. When the length of D1 is close to the bending radius R1 of the liquid cooling pipes 30, the length of D1 is the smallest and the length of D2 is the largest. The second liquid cooling joint 22 is further away from an outside of the box body 10 and connected to the external liquid cooling pipes 30 arranged on the vehicle, which allows for a larger bending radius of the external liquid cooling pipes 30. The specific values of D1 and R1 are not limited in the present application, which is set based on an actual length of the first side plates 140.

In some embodiments, the first liquid cooling section 31, the second liquid cooling section 32, and the connecting section 33 are formed into an integrated structure. For the integrated structure, it is not needed to independently manufacture each part and carry out subsequent assembly steps, which reduces the number and assembly process of pipe components of the liquid cooling pipes 30, thus simplifying the production process. In addition, since components of the liquid cooling pipes 30 are connected in an integrally formed manner, this continuity and seamlessness reduces a potential weakness or a fatigue at a connection, providing high structural strength and rigidity.

In some embodiments, one end of each first liquid cooling joint 21 is connected to the first cooling plate 11, and another end of the first liquid cooling joint 21 is arranged to extend in the first direction and connected to the first liquid cooling section 31. One end of the first liquid cooling section 31 is connected to the first liquid cooling joint 21 and is arranged in the first direction towards the second cooling plate 12. In the first liquid cooling section 31, the flow direction of the coolant does not change.

In some embodiments, the first liquid cooling joint 21 is connected to the first cooling plate 11 by welding. In addition, the connection is achieved by riveting, screwing, and other methods, and the specific connection method is not limited in the present application.

In some embodiments, in the second cooling plate 12, multiple liquid cooling flow channels 40 are arranged to be communicated with each other in a third direction. One opening is formed in each end of the second cooling plate 12 to be in communication with the liquid cooling flow channels 40, and the multiple liquid cooling flow channels 40 are arranged in the second direction. The box body assembly 100 includes two sealing parts 130, and one opening is blocked by each of the sealing parts 130. In the second direction, an opening is formed in the second cooling plate 12 to be in communication with the second liquid cooling joint 22, and the opening is in communication with the liquid cooling flow channels. The third direction is perpendicular to the first direction and the second direction.

Specifically, the first direction and the second direction are perpendicular to each other in a same plane, the third direction is perpendicular to the first direction and perpendicular to the second direction, and the third direction is a length direction of the second cooling plate 12, that is, a length direction of the box body assembly 100. The flow channels are arranged to be communicated with each other in the third direction, which facilitates a processing of the flow channels, and allows the coolant flow along the liquid cooling flow channels 40 in the second cooling plate 12. The liquid cooling flow channels 40 are arranged in the second direction, that is, the number of the liquid cooling flow channels 40 increases gradually in the second direction. The openings of the second cooling plate 12 are arranged to extend in the second direction of the second cooling plate 12 and are in communication with multiple liquid cooling flow channels 40. The sealing parts 130 provide sealing, and each of the sealing parts 130 is configured to block the openings at both ends of the liquid cooling flow channels 40 to prevent liquid leakage and maintain an integrity of the liquid cooling system.

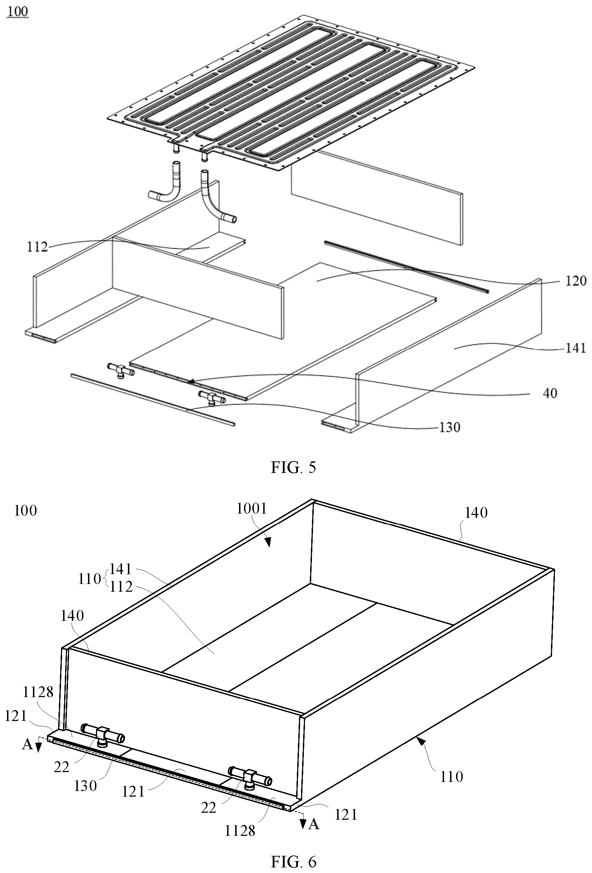

Please refer to FIG. 5. FIG. 5 is another exploded view of a box body assembly provided in an embodiment of the present application. In some embodiments, the second cooling plate 12 includes a main plate 120 and sub-plates 112 arranged on two sides of the main plate 120. The liquid cooling flow channels 40 are also arranged in the sub-plates 112. Once the sub-plates 112 and the main plate 120 are mounted, the liquid cooling flow channels 40 in the sub-plates 112 are in communication with the liquid cooling flow channels 40 in the main plate 120. The openings of the second cooling plate 12 are in communication with the liquid cooling flow channels 40 in the sub-plates 112 and connected to the liquid cooling flow channels 40 in the main plate 120. The box body assembly 100 further includes second side plates 141 arranged opposite to each other in the second direction. Each of the second side plates 141 is perpendicularly connected to one of the sub-plates 112, and each of the sub-plates 112 forms an L-shaped structure with each of the second side plates 141.

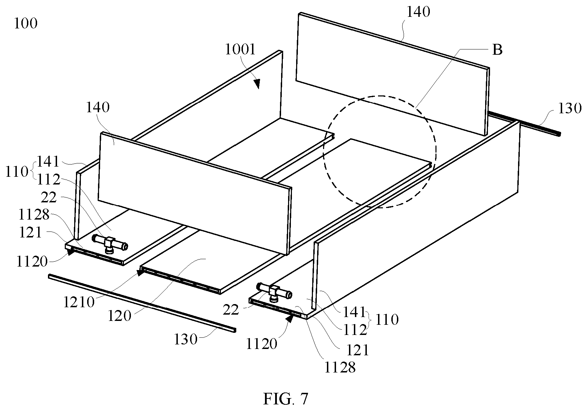

FIG. 6 is a schematic diagram of a structure of a box body provided in an embodiment of the present application. FIG. 7 is a schematic diagram of a disassembled structure of a box body provided in an embodiment of the present application. As shown in FIG. 6 and FIG. 7, the box body assembly 100 includes two box body parts 110 and a main plate 120, and the box body part 110 includes a second side plate 141 and a sub-plate 112 that are integrally connected. As such, the box body parts 110 is formed by extrusion molding of a profile. Specifically, the box body parts 110 are formed by extruding molding of a profile with cavities through profile molds. The material of the profile is aluminum or other metals, which are not limited to this herein.

The second side plates 141 of the two box body parts 110 are arranged opposite to each other and at intervals in the second direction to form a mounting space 1001 for mounting a battery module (not shown in the Figure). First liquid cooling channels 1120 are arranged in the sub-plates 112 of the box body assemblies 110. The two sub-plates 112 are located on a same side of the mounting space 1001 in the first direction, and the first direction is arranged at an angle to the second direction. An angle between the second direction and the first direction is a right angle or an acute angle, depending on a structure of the box body of the battery pack.

In addition, the main plate 120 is welded between the two sub-plates 112. A side plate face of the main plate 120 is facing the mounting space 1001. Second liquid cooling channels 1210 in communication with the first liquid cooling channels 1120 are arranged in the main plate 120, so that the main plate 120 and the two sub-plates 112 are located on the same side of the mounting space 1001, and side plate faces of the main plate 120 and the two sub-plates 112 are all facing the mounting space 1001, so that the sub-plates 112 and the main plate 120 dissipate heat from the battery module in the mounting space 1001.

In the embodiments of the present application, the main plate 120 is welded between the sub-plates 112 of the two box parts 110, so that the side plate face of the main plate 120 faces the mounting space 1001 between the second side plates 141 of the two box parts 110, and the second liquid cooling channels 1210 of the main plate 120 are in communication with the first liquid cooling channels 1120 of the sub-plates 112, which allows the sub-plates 112 of the two box parts 110 to be combined with the main plate 120 to form a liquid cooling plate structure with a wide width. In addition, since the main plate 120 is welded between two sub-plates 112, a width of the sub-plates 112 in the second direction is reduced in the case where an overall width of the liquid cooling plate structure in the second direction remains unchanged, thereby reducing a width of the profile for forming the box body assembly 110 by extrusion molding, which is conducive to reducing the difficulty and cost of extrusion molding of the profile, improving a flatness of the sub-plates 112 and the side plates formed by extrusion molding of the profile, thereby improving a whole pass rate of the liquid cooling plates formed by welding the sub-plates 112 and the main plate 120.

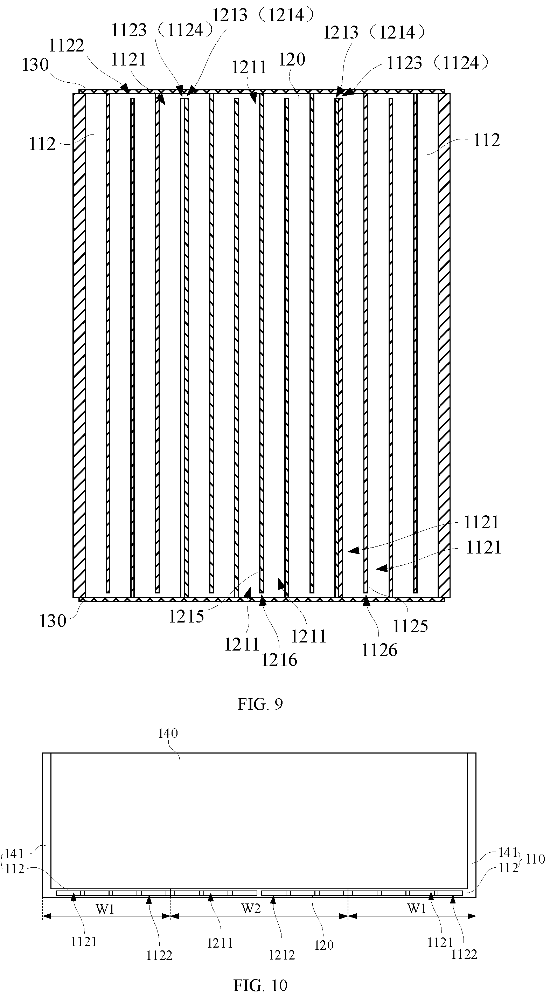

In some embodiments, as shown in FIG. 9 and FIG. 10, first communication holes 1124 in communication with the first liquid cooling channels 1120 are formed on a side, facing the main plate 120, of the sub-plates 112, and second communication holes 1214 in communication with the second liquid cooling channels 1210 are formed on two sides of the main plate 120 in the second direction. Once the two sub-plates 112 are welded to the main plate 120 respectively, the first communication holes 1124 of the two sub-plates 112 are in communication with two second communication holes 1214 in a one-to-one correspondence, so that the first liquid cooling channels 1120 of the two sub-plates 112 are in communication with the second liquid cooling channels 1210 respectively.

As such, when the sub-plates 112 is welded to the main plate 120, the first communication holes 1124 of the sub-plates 112 are aligned with the second communication holes 1214 on the main plate 120, so that the first liquid cooling channels 1120 of the sub-plates 112 are in communication with the second liquid cooling channels 1210, which is very convenient to operate and is conducive to improving a processing efficiency of the box body assembly 100.

The first communication holes 1124 of the sub-plates 112 are located at an end, in the third direction Z, of the sub-plates 112, and the second direction and the first direction are each configured at an angle to the third direction Z. Correspondingly, the second communication holes 1214 of the main plate 120 are located at an end, in the third direction Z, of the main plate 120, so that the first communication holes 1124 of the sub-plates 112 are aligned with and in communication with the second communication holes 1214 on the main plate 120.

Of course, the first communication holes 1124 of the sub-plates 112 are located in the middle of the sub-plates 112 in the third direction Z, or the first communication holes 1124 of the sub-plates 112 are kept at a certain distance from an end of the sub-plates 112 in the third direction Z. Correspondingly, the second communication holes 1214 of the main plate 120 is located in the middle of the main plate 120 in the third direction Z, or the second communication holes 1214 of the main plate 120 are kept at a certain distance from an end of the main plate 120 in the third direction Z, as long as the first communication holes 1124 of the sub-plates 112 are aligned with the second communication holes 1214 of the main plate 120.

In some embodiments, as shown in FIG. 9 and FIG. 10, the first liquid cooling channels 1120 of the sub-plates 112 include multiple first sub-flow channels 1121, the multiple first sub-flow channels 1121 are arranged in sequence in the second direction, and the first sub-flow channels 1121 extends in the third direction Z. The second direction and the first direction are each configured at an angle to the third direction Z. As such, a distribution of the first liquid cooling channels 1120 in the sub-plates 112 is more uniform, which is beneficial to improve a heat dissipation uniformity of each part of the sub-plates 112.

At least one of the first sub-flow channels 1121 is in communication with the first communication holes 1124, so that the first liquid cooling channels 1120 are in communication with the first communication holes 1124. In some embodiments, the first sub-flow channels 1121 close to the main plate 120 of the multiple first sub-flow channels 1121 are in communication with the first communication holes 1124, that is, the first communication holes 1124 are in communication with a nearest first sub-flow channel 1121, which allows a structure of the first liquid cooling channels 1120 of the sub-plates 112 to be simpler and a processing to be more convenient.

Continuing to refer to FIG. 9 and FIG. 10, the second liquid cooling channels 1210 include multiple second sub-flow channels 1211, the multiple second sub-flow channels 1211 are arranged in sequence in the first direction, and the multiple second sub-flow channels 1211 extends in the third direction Z. The second direction and the first direction are each configured at an angle to the third direction Z. As such, a distribution of the second liquid cooling channels 1210 in the main plate 120 is more uniform, which is beneficial to improve a heat dissipation uniformity of each part of the main plate 120.

At least one of the second sub-flow channels 1211 is in communication with the first liquid cooling channels 1120, so that the first liquid cooling channels 1120 are in communication with the second liquid cooling channels 1210. In some embodiments, two second sub-flow channels 1211 located on two sides of the main plate 120 in the second direction are in communication with two second communication holes 1214 in a one-to-one correspondence, that is, the second communication holes 1214 is in communication with a nearest second sub-flow channel 1211, which allows a structure of the second liquid cooling channels 1210 of the main plate 120 to be simpler and a processing to be more convenient.

As shown in FIG. 4, first openings 1122 in communication with the multiple first sub-flow channels 1121 are formed in at least one end of the sub-plates 112 in the third direction Z, and the second direction and the first direction are each configured at an angle to the third direction Z. Second openings 1212 in communication with the multiple second sub-flow channels 1211 are formed in at a same end of the main plate 120 in the third direction Z, that is, the first openings 1122 and the second openings 1212 are located on a same side of the box body assembly 100 in the third direction Z.

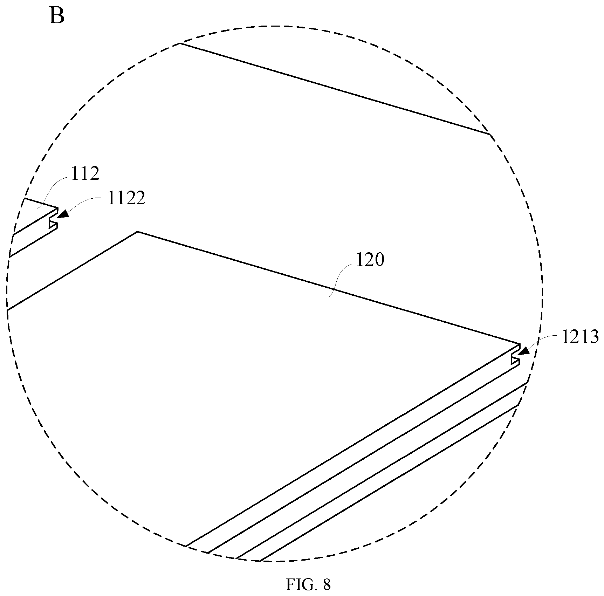

In some embodiments, as shown in FIG. 8 and FIG. 9, first notches 1123 are formed in a side, close to the main plate 120, of the first openings 1122 of the sub-plates 112, and second notches 1213 are formed in at least one side, close to the sub-plates 112, of the second openings 1212 of the main plate 120, so that the first notches 1123 and the second notches 1213 are aligned with and in communication with each other once the sub-plates 112 are connected to the main plate 120 by welding.

The box body assembly 100 further includes sealing parts 130 connected to the sub-plates 112 and the main plate 120. The first openings 1122 and the second openings 1212 are sealed by the sealing parts 130, thereby preventing the coolant in the first liquid cooling channels 1120 and the second liquid cooling channels 1210 from leaking out from the first openings 1122 or the second openings 1212. In addition, the first notches 1123 are enclosed by the sealing parts 130 to form the first communication holes 1124, and the second notches 1213 are enclosed by the sealing parts 130 to form the second communication holes 1214. The first communication holes 1124 are formed by enclosing the first notches 1123 through the sealing parts 130, and the second communication holes 1214 are formed by enclosing the second notches 1213 through the sealing parts130, which allows a processing of the first communication holes 1124 and the second communication holes 1214 more convenient, and is conducive to improving the processing efficiency of the box body assembly 100.

In some embodiments, the first openings 1122 in communication with the multiple first sub-flow channels 1121 are formed in two ends of the sub-plates 112 in the third direction Z. Second openings 1212 in communication with the multiple second sub-flow channels 1211 are formed in at two ends of the main plate 120 in the third direction Z. The box body assembly 100 includes two sealing parts 130 connected to the sub-plates 112 and the main plate 120, one of the sealing parts 130 seals the first openings 1122 and the second openings 1212 on one end of the sub-plates 112 and the main plate 120 in the third direction Z, another one of the sealing parts 130 seals the first openings 1122 and the second openings 1212 on another end of the sub-plates 112 and the main plate 120 in the third direction Z.

In some embodiments, in the second direction, the multiple first sub-flow channels 1121 are in communication with each other in series. That is, the multiple first sub-flow channels 1121 of the sub-plates 112 are in communication with each other in series in the direction away from the main plate 120. In three adjacent first sub-flow channels 1121, an end of a first sub-flow channel 1121 located in the middle in the third direction Z is in communication with an end of a first sub-flow channel 1121 close to the main plate 120 in the third direction Z, and another end of a first sub-flow channel 1121 located in the middle in the third direction Z is in communication with another end of a first sub-flow channel 1121 away from the main plate 120 in the third direction Z, so that the multiple first sub-flow channels 1121 are in communication with each other in series in the second direction.

The sub-plates 112 include first spacer plates 1125 located between two adjacent first sub-flow channels 1121. First gaps 1126 are formed between an end of the first spacer plates 1125 in the third direction Z and the sealing parts 130, and the first sub-flow channels 1121 on two sides of the first spacer plates 1125 are in communication with each other through the first gaps 1126, so that the two adjacent first sub-flow channels 1121 are in communication with each other at an end in the third direction Z.

Specifically, there are multiple first spacer plates 1125, and the multiple first spacer plates 1125 and the multiple first sub-flow channels 1121 are alternately arranged in the second direction. In a direction of the sub-plates 112 away from the main plate 120, first gaps 1126 are formed between the first spacer plates 1125 with odd numbers among the multiple first spacer plates 1125 of the sub-plates 112 and one of the sealing parts 130, and the first spacer plates 1125 with even numbers abut against the one of the sealing parts 130. Meanwhile, the first spacer plates 1125 with odd numbers abut against another one of the sealing parts 130, and first gaps 1126 are formed between the first spacer plates 1125 with even numbers and the another one of the sealing parts 130, so that the multiple first sub-flow channels 1121 are in communication with each other in series in the second direction.

In some embodiments, in the second direction, multiple second sub-flow channels 1211 are in communication with each other in series. In three adjacent second sub-flow channels 1211 of the main plate 120, an end of a second sub-flow channel 1211 located in the middle in the third direction Z is in communication with an end of a second sub-flow channel 1211 located on one side in the third direction Z, and another end of the second sub-flow channel 1211 in the middle is in communication with an end of a second sub-flow channel 1211 located on another side in the third direction Z.

The main plate 120 includes second spacer plates 1215 located between two adjacent second sub-flow channels 1211. Second gaps 1216 are formed between an end of the second spacer plates 1215 in the third direction Z and the sealing parts 130, and the second sub-flow channels 1211 on two sides of the second spacer plates 1215 are in communication with each other through the second gaps 1216, so that the two adjacent second sub-flow channels 1211 are in communication with each other at an end in the third direction Z.

Specifically, there are multiple second spacer plates 1215, and the multiple second spacer plates 1215 and the multiple second sub-flow channels 1211 are alternately arranged in the second direction. In a direction of the main plate 120 away from one of the sub-plates 112, second gaps 1216 are formed between the second spacer plates 1215 with odd numbers among the multiple second spacer plates 1215 of the main plate 120 and one of the sealing parts 130, and the second spacer plates 1215 with even numbers abut against the one of the sealing parts 130. Meanwhile, the second spacer plates 1215 with odd numbers abut against another one of the sealing parts 130, and second gaps 1216 are formed between the second spacer plates 1215 with even numbers and the another one of the sealing parts 130, so that multiple second sub-flow channels 1211 are in communication with each other in series in the second direction.

It should be noted that the first liquid cooling channels 1120 of the sub-plates 112 and the second liquid cooling channels 1210 of the main plate 120 are arranged according to the embodiments as described above, or only one of the first liquid cooling channels 1120 of the sub-plates 112 and the second liquid cooling channels 1210 of the main plate 120 are arranged according to the embodiments as described above, and another one of the first liquid cooling channels of the sub-plates and the second liquid cooling channels of the main plate are arranged in other structures. For example, the multiple first sub-flow channels 1121 of the first liquid cooling channels 1120 or the multiple second sub-flow channels 1211 of the second liquid cooling channels 1210 are arranged in parallel.

In some embodiments, as shown in FIG. 10, a ratio of a sum of the widths W1 of the two sub-plates 112 in the second direction to a width W2 of the main plate 120 in the second direction is greater than or equal to 20%, and less than or equal to 50%, that is, 20%≤2W1/W2≤50%, which makes a design of the sum of the widths of the sub-plates 112 of the first box body assembly 110 and the second side plates 141, as well as the width of the main plate 120 more reasonable, so that a width of the profile for forming the box body assembly 110 by extrusion molding is suitable while increasing the overall width of the liquid cooling plates.

The ratio of a sum of the widths W1 of the two sub-plates 112 in the second direction and the width W2 of the main plate 120 in the second direction is 25%, 30%, 40%, etc., depending on a size of the box body assembly 100, which is not limited herein.

In some embodiments, as shown in FIG. 6 and FIG. 7, the box body assembly 100 further includes two first side plates 140 arranged opposite to each other, the two first side plates 140 are arranged on two sides of the mounting space 1001 in the third direction Z. The second side plates 141, the sub-plates 112, and the main plate 120 are each connected to the first side plates 140, thereby further improving a structural stability of the box body assembly 100.

The first side plates 140 are connected to the second side plates 141, the sub-plates 112, and the main plate 120 by welding, screw connection, and other methods, which is not limited herein.

In some embodiments, as shown in FIG. 6 and FIG. 7, the two sub-plates 112 each include a second protruding part 121, and second protruding parts 121 of the two sub-plates 112 are located on a side, facing away from the mounting space, of a same first side plate 140. A second liquid cooling joint 22 is mounted on one of the second protruding parts 12, and the second liquid cooling joint 22 is a liquid inlet joint. A second liquid cooling joint 22 is mounted on another one of the second protruding parts 121, and the second liquid cooling joint 22 is a liquid outlet joint. The second liquid cooling joint 22 of the second protruding part 121 of one of the sub-plates 112 is in communication with the first liquid cooling channels 1120 of the one of the sub-plates 112, and the second liquid cooling joint 22 of the second protruding part 121 of another one of the sub-plates 112 is in communication with the first liquid cooling channels 1120 of the another one of the sub-plates 112. The liquid inlet joint is in communication with an outlet of a coolant supply equipment (not shown in the Figure), and the liquid outlet joint is in communication with an inlet of the coolant supply equipment, so that the coolant supply equipment continuously supplies coolant to the first liquid cooling channels 1120 of the sub-plates 112 and the second liquid cooling channels 1210 of the main plate 120.

A mounting face 1128 is arranged on a side, facing the first side plate 140, of the second protruding part 121, and one liquid cooling joint 22 in communication with and corresponding to the first liquid cooling channels 1120 is arranged on the mounting face 1128 of one of the second protruding parts 121, and another liquid cooling joint 22 in communication with and corresponding to the first liquid cooling channels 1120 is arranged on the mounting face 1128 of another one of the second protruding parts 121, so that second liquid cooling joints 22 are in communication with the coolant supply equipment.

It should be noted that the second liquid cooling joints 22 are in communication with corresponding first liquid cooling channels 1120 means that the second liquid cooling joint 22 located on the second protruding part 121 of one of the sub-plates 112 is in communication with the first liquid cooling channels 1120 in one of the sub-plates 112, and the second liquid cooling joint 22 located on the second protruding part 121 of another one of the sub-plates 112 is in communication with the first liquid cooling channels 1120 in another one of the sub-plates 112.

Specifically, the first liquid cooling channels 1120 in the sub-plates 112 extend to the second protruding parts 121. A mounting opening in communication with the first liquid cooling channels 1120 is formed on the mounting face 1128 of the second protruding part 121. The liquid inlet joint 151 or the liquid outlet joint 152 is fixedly mounted on the mounting face 1128 of a corresponding second protruding part 121 and in communication with the mounting opening on the mounting face 1128, so that the liquid inlet joint 151 or the liquid outlet joint 152 is in communication with the first liquid cooling channels 1120 of a corresponding sub-plate 112.

In some embodiments, as shown in FIG. 6 and FIG. 7, the sub-plates 112 are made into a flat plate structure to facilitate better contact between the sub-plates 112 with the battery module in the mounting space 1001 and improve the heat dissipation effect on the battery module. Meanwhile, it makes the arrangement of the first liquid cooling channels 1120 in the sub-plates 112 more convenient, which is conducive to improving the production efficiency of the sub-plates 112.

Similarly, the main plate 120 is made into a flat plate structure to facilitate better contact between the main plate 120 with the battery module in the mounting space 1001 and improve the heat dissipation effect on the battery module. Meanwhile, it makes the arrangement of the second liquid cooling channels 1210 in the main plate 120 more convenient, which is conducive to improving the production efficiency of the main plate 120.

It should be noted that both the sub-plates 112 and the main plate 120 are made into a flat plate structure, or only one of the sub-plates 112 and the main plate 120 is made into a flat plate structure, depending on a structure of the battery pack, which is not limited herein.

The present application embodiment further provides a battery pack, the battery pack includes a box body assembly 100, and a specific structure of the box body assembly 100 is referred to the embodiments as described above. Since the battery pack adopts all the technical solutions of all the embodiments as described above, the battery pack has at least all the beneficial effects brought by the technical solutions of the embodiments as described above, which will not be repeated here.

The battery pack includes the box body assembly 100 and the battery module, and the battery module is mounted in the mounting space 1001 of the box body assembly 100. The structure of the battery pack is referred to any of the embodiments as described above. The battery pack provided in the embodiments of the present application is used for vehicles, energy storage systems, etc., which will not be repeated herein.

## Claims

1. A box body assembly, configured for accommodating a battery module, **characterized by** comprising:
a box body (10) comprising a first cooling plate (11) and a second cooling plate (12) arranged opposite to each other, and first side plates (140) connected between the first cooling plate (11) and the second cooling plate (12); the first side plates (140) comprising side edges arranged opposite to each other; and
liquid cooling joint groups (20) comprising a first liquid cooling joint (21) and a second liquid cooling joint (22); the first liquid cooling joint (21) being connected to the first cooling plate (11);
the second liquid cooling joint (22) comprising a first transition section (221), a second transition section (222), and a third transition section (223); the first transition section (221) being connected to the second cooling plate (12), both the second transition section (222) and the third transition section (223) being connected to the first transition section (221); the second transition section (222) being configured to connect an external liquid cooling structure; the third transition section (223) and the second transition section (222) being arranged to extend in directions facing away from each other and in communication with the first liquid cooling joint (21); a distance between an orthographic projection of the first liquid cooling joint (21) on a plane where the second cooling plate (12) is located and an orthographic projection of the first transition section (221) on the plane where the second cooling plate (12) is located being D1; a distance from the first transition section (221) to the side edges being D2, and D2 being greater than D1.

2. The box body assembly of claim 1, wherein the first cooling plate (11) comprises a first protruding part (111) arranged to protrude from one of the first side plates (140), and the first liquid cooling joint (21) is connected to the first protruding part (111).

3. The box body assembly of claim 1 or claim 2, wherein the second cooling plate (12) comprises a second protruding part (121) arranged to protrude from one of the first side plates (140), and the first transition section (221) is connected to the second protruding part (121).

4. The box body assembly of claim 1, wherein the box body assembly (100) further comprises liquid cooling pipes (30), the liquid cooling pipe (30) comprises a first liquid cooling section (31), a connecting section (33), and a second liquid cooling section (32) connected in sequence; the first liquid cooling section (31) extends in a first direction and is connected to the first liquid cooling joint (21); the second liquid cooling section (32) extends in a second direction and is connected to the second liquid cooling joint (22); the first direction is different from the second direction; and the connecting section (33) is bent and connected between the first liquid cooling section (31) and the second liquid cooling section (32).

5. The box body assembly of claim 4, wherein the box body assembly (100) comprises two liquid cooling joint groups (20) and two liquid cooling pipes (30); each of the liquid cooling pipes (30) corresponds to one of the liquid cooling joint groups (20); one of the liquid cooling pipes (30) is configured to input a coolant, and another one of the liquid cooling pipes (30) is configured to output the coolant.

6. The box body assembly of claim 4, wherein a bending radius of the connecting section (33) is R1, and a length of D1 is not less than a length of R1.

7. The box body assembly of claim 4, wherein the first liquid cooling section (31), the second liquid cooling section (32), and the connecting section (33) are formed into an integrated structure.

8. The box body assembly of claim 1, wherein box body assembly (100) comprises:
two box body parts (110), wherein the box body parts (110) comprises second side plates (141) and sub-plates (112) connected together; the second side plates (141) of the two box body parts (110) are arranged opposite to each other and at intervals in the second direction and form a mounting space (1001) for mounting the battery module; the liquid cooling flow channels (40) comprise first liquid cooling channels (1120) and second liquid cooling channels (1210); the first liquid cooling channels (1120) are arranged in the sub-plates (112); two of the first liquid cooling channels (112) are located on a same side of the mounting space (1001) in the first direction; and the first direction is arranged at an angle to the second direction; and
a main plate (120) welded between two of the sub-plates (112), wherein a side plate face of the main plate (120) is facing the mounting space (1001); and second liquid cooling channels (1210) in communication with the first liquid cooling channels (1120) are arranged in the main plate (120).

9. The box body assembly of claim 8, wherein first communication holes (1124) in communication with the first liquid cooling channels (1120) are formed on a side, facing the main plate (120), of the sub-plates (112), second communication holes (1214) in communication with the second liquid cooling channels (1210) are formed on two sides of the main plate (120) in the second direction, and the first communication holes (1124) of the two sub-plates (112) are in communication with two second communication holes (1214) in a one-to-one correspondence, so that the first liquid cooling channels (1120) of the two sub-plates (112) are in communication with the second liquid cooling channels (1210) respectively;
and wherein the first communication holes (1124) are located at an end in a third direction of the sub-plates (112); and the second direction and the first direction are each configured at an angle to the third direction.

10. The box body assembly of claim 9, wherein the first liquid cooling channels (1120) comprises a plurality of first sub-flow channels (1121); the first sub-flow channels (1121) are arranged in sequence in the second direction; the first sub-flow channels (1121) extends in a third direction; a first sub-flow channel (1121) close to the main plate (120) is in communication with the first communication holes (1124); and the second direction and the first direction are each configured at an angle to the third direction; and/or,
the second liquid cooling channels (1210) comprise a plurality of second sub-flow channels (1211); the second sub-flow channels (1211) are arranged in sequence in the first direction; the second sub-flow channels (1211) extend in the third direction Z; two second sub-flow channels (1211) located on two sides of the main plate (120) in the second direction are in communication with two second communication holes (1214) in a one-to-one correspondence; and the second direction and the first direction are each configured at an angle to the third direction.

11. The box body assembly of claim 10, wherein first openings (1122) in communication with the first sub-flow channels (1121) are formed in at least one end of the sub-plates (112) in the third direction; first notches (1123) are formed in a side, close to the main plate (120), of the first openings (1122); second openings (1212) in communication with the second sub-flow channels (1211) are formed in at an same end of the main plate (120) in the third direction; and second notches (1213) are formed in at least one side, close to the sub-plates (112), of the second openings (1212); and
the box body assembly (100) further comprises sealing parts (130) connected to the sub-plates (112) and the main plate (120); the first openings (1122) and the second openings (1212) are sealed through the sealing parts (130); the first notches (1123) are enclosed through the sealing parts (130) to form the first communication holes (1124); and the second notches (1213) are enclosed through the sealing parts (130) to form the second communication holes (1214).

12. The box body assembly of claim 11, wherein the sub-plates (112) comprise first spacer plates (1125) located between two adjacent first sub-flow channels (1121); first gaps (1126) are formed between an end of the first spacer plates (1125) in the third direction and the sealing parts (130); and the first sub-flow channels (1121) on two sides of the first spacer plates (1125) are in communication with each other through the first gaps (1126); and/or,
the main plate (120) comprises second spacer plates (1215) located between two adjacent second sub-flow channels (1211); second gaps (1216) are formed between an end of the second spacer plates (1215) in the third direction and the sealing parts (130); and the second sub-flow channels (1211) on two sides of the second spacer plates (1215) are in communication with each other through the second gaps (1216).

13. The box body assembly of any one of claims 8 to 12, wherein a ratio of widths of the two sub-plates (112) in the second direction to a width of the main plate (120) in the second direction is greater than or equal to 20%, and less than or equal to 50%.

14. The box body assembly of any one of claims 8 to 12, wherein two first side plates (140) are arranged on two sides of the mounting space (1001) in the third direction; the second side plates (141), the sub-plates (112), and the main plate (120) are each connected to the first side plates (140); and the second direction and the first direction are each configured at an angle to the third direction;
and wherein the sub-plates (112) are made into a flat plate structure; and/or,
the main plate (120) is made into a flat plate structure.

15. A battery pack, **characterized by** comprising:
a battery module;
the box body assembly (100) of any one of claims 1 to 14; a mounting space (1001) being formed in a box body (10); the battery module being arranged in the mounting space (1001); and a second cooling plate (12) being located on a bottom of the battery module.
